# FASCICULE DE BREVET EUROPEEN

(11) **EP 0 359 619 B1**
(45) Date de publication et mention de la délivrance du brevet: **20.04.1994**
(21) Numéro de dépôt: 89402375.3
(22) Date de dépôt: 31.08.1989
(51) Int. Cl.: G01N 27/26

(54) **Automate de séparation de macromolécules ou de fragments de celles-ci**
Automat zur Trennung von Makromolekülen oder deren Bruchstücken
Automaton for separating macromolecules or their fragments

(30) Priorité: 06.09.1988 FR 8811627
(43) Date de publication de la demande: 21.03.1990
(73) Titulaire: BERTIN & CIE, F-78373 Plaisir Cedex (FR)
(72) Inventeur: Cohen, Daniel, F-94160 St. Mande (FR); Dufau, Frédéric, F-78170 La Celle St. Cloud (FR); Hache, Jean, F-78960 Voisins le Bretonneux (FR)
(74) Mandataire: Ramey, Daniel

(56) Documents cités:
- EP-A- 0 134 622
- WO-A-87/02132
- DE-B- 3 808 613
- GB-A- 2 169 703
- US-A- 4 391 688

## Description

La présente invention est relative à un automate de séparation de macromolécules ou de fragments de celles-ci.

On connaît les techniques du "Southern blot" et du "Northern blot", qui associent des techniques de séparation, comme l'électrophorèse sur gel d'agarose ou de polyacrylamide à des méthodes de détection telles que l'hybridation entre deux séquences complémentaires d'acides nucléiques (ADN et ARN), en intercalant entre l'électrophorèse et la révélation, une étape de transfert des acides nucléiques du gel sur un support solide, la détection pouvant ensuite se faire sur ce support. Des appareils adaptés à des telles opérations ont été décrits (PCT WO 87/02132) et comportent notamment une cuve d'électrophorèse conçue de manière à pouvoir être associée à une chambre à vide et à permettre l'insertion, entre la cuve et la chambre à vide, d'une membrane de transfert. Un tel appareil peut notamment être automatisé, dans le cas où il comprend des pompes programmables et des réservoirs.

De telles techniques de transfert ont également été appliquées aux protéines; en ce cas il s'agit de "Western blot".

Ces techniques sont à l'heure actuelle très utilisées, mais ne sont absolument pas adaptées au traitement simultané d'un grand nombre d'échantillons différents.

D'autres appareils ont également été proposés pour la mise en oeuvre d'une électrophorèse, adaptés à une pluralité de gels, comme décrit notamment dans le Brevet US 4 391 688, qui prévoit un système d'électrophorèse adapté à une pluralité de gels d'agarose.

Cet appareil comprend en particulier : deux containers parallèles, aptes à recevoir du tampon et contenant chacun : un support d'électrode faisant toute la longueur de chacun desdits containers, une électrode en platine et des moyens pour maintenir les électrodes en position verticale, au moins deux plaques horizontales contenant un gel d'agarose, un moyen capable d'établir un contact capillaire entre chaque extrémité de gel et le tampon présent dans chacun des containers, et des pièces d'espacement entre deux plaques contenant un gel.

D'autres appareils décrivent plus particulièrement l'étape de transfert, de manière autonome ; la Demande GB 2 169 703 décrit un appareil adapté à l'électrotransfert horizontal sans formation de bulles d'oxygène et d'hydrogène au niveau des électrodes, comprenant une chambre incluant un support sur lequel repose le matériel soumis à l'électrotransfert, une première électrode située sous ledit support, une deuxième électrode située au-dessus dudit support et des moyens situés entre la première électrode et le support, permettant d'éviter la formation desdites bulles à la surface du support lors de l'électrotransfert.

L'ensemble de ces appareils ne sont toutefois pas adaptés à la séparation et au transfert automatique d'une grande quantité de macromolécules différentes.

La Demanderesse s'est en conséquence donné pour but de pourvoir à une installation de séparation d'une grande quantité de macromolécules différentes, notamment acides nucléiques (ADN, ARN) et protéines et/ou fragments de celles-ci, préalablement extraites des cellules sélectionnées de manière connue ; elle s'est également donné pour but de pourvoir à une telle installation à fonctionnement rapide et mise en oeuvre facile.

La présente invention a pour objet une installation pour la séparation de macromolécules et/ou de fragments de celles-ci, comprenant :
- une pluralité d'éléments pour la migration-transfert desdites macromolécules, incluant chacun un gel d'électrophorèse et une membrane de transfert-fixation desdites macromolécules, pour la migration puis le transfert desdites macromolécules du gel vers la membrane ;
- des moyens d'amenée desdites macromolécules de l'échantillon vers les éléments de migration-transfert ;
- une cuve de migration comportant une structure interne amovible formée d'une pluralité de cadres susceptibles d'accueillir lesdits éléments, et dans laquelle la migration et le transfert des macromolécules sont réalisés respectivement à l'aide :
   (a) des moyens d'application d'un premier champ électrique provoquant la migration électrophorétique des macromolécules, incluant une série d'électrodes parallèles entre elles et aux éléments de migration-transfert, lesquelles électrodes sont disposées dans des plans perpendiculaires à la direction de migration des macromolécules dans lesdits éléments ; et
   (b) des moyens identiques d'application d'un deuxième champ électrique, perpendiculaire au premier champ électrique, pour le transfert des macromolécules des gels vers les membranes et pour leur fixation sur lesdites membranes, et
- un microprocesseur d'automatisation de la commande séquentielle de l'amenée des macromolécules auxdits éléments de migration-transfert, de l'introduction desdits éléments dans la cuve de migration, puis de la mise en oeuvre des premier et deuxième champ électrique.

Chaque élément pour la migration-transfert comprend avantageusement, associé à la membrane de transfert-fixation et au gel d'électrophorèse, un support, ledit élément étant sous forme d'un empilage, dont la membrane de transfert-fixation peut être séparée.

Le moyen d'amenée est constitué, de manière connue, d'un bras de transfert associé à un organe de prélèvement approprié desdites macromolécules, ledit moyen d'amenée déposant les macromolécules sur le gel d'electrophorèse en vue de la migration électrophorétique.

Dans un mode de réalisation avantageux de l'installation, l'invention prévoit, dans le cas de la séparation d'acides nucléiques, préalablement à la migration électrophorétique, un poste de traitement par digestion desdits acides nucléiques.

Selon une disposition avantageuse de ce mode de réalisation de l'installation, le poste de traitement de digestion comporte des moyens d'introduction des réactifs de digestion dans les alvéoles d'une plaque de microtitration contenant les acides nucléiques, ainsi que des moyens de réglage de la température de ladite plaque.

Dans un autre mode de réalisation avantageux de l'installation, l'invention prévoit, que préalablement au dépôt des macromolécules sur le gel d'électrophorèse, le coulage dudit gel soit réalisé et des alvéoles soient préformées dans ledit gel au moyen d'outils appropriés, lesdits outils étant commandés par le microprocesseur d'automatisation.

Dans un tel mode de réalisation, chaque élément pour la migration-transfert comprend quatre parois dont deux, adjacentes au moyen d'application du champ électrique de migration sont des membranes de dialyse, lesdites parois formant cuvette et servant de moule audit gel d'électrophorèse, préalablement à sa solidification.

Selon une autre caractéristique de l'invention, les cadres de la structure interne de la cuve de migration sont montés à pivotement autour d'un axe de celle-ci, pour pouvoir passer d'une position en laquelle les dépôts de macromolécules sont possibles, à une position en laquelle s'effectue la migration-transfert.

Selon encore une autre caractéristique de l'installation, la cuve de migration comprend des moyens de réglage de sa température et des moyens de translation verticale de la structure interne.

L'installation comprend également des moyens de remplissage et des moyens d'évacuation de la cuve de migration en produits liquides de migration et/ou de transfert, lesdits moyens étant commandés par le microprocesseur d'automatisation.

Selon encore une autre caractéristique de l'installation, celle-ci comprend également des moyens pour commander le pivotement des cadres, dans et hors de la cuve, ainsi que des moyens de commande pas à pas de l'ensemble de la structure interne, qui sont dans la direction de l'axe.

Conformément à l'invention, les moyens d'application du premier champ électrique comprennent une série d'électrodes parallèles entre elles et aux éléments de migration-transfert, disposées dans des plans perpendiculaires à la direction de migration des macromolécules, des moyens d'application de potentiels aux électrodes situées dans les plans précités et des moyens de commande pour faire varier dans l'espace et/ou dans le temps la distribution des potentiels desdits plans d'électrodes.

En particulier, les électrodes sont disposées aux intersections de deux séries de plans, les premiers perpendiculaires aux éléments de migration et à la direction précitée de migration, les seconds perpendiculaires aux premiers.

Ainsi, en commandant de la façon voulue la distribution des potentiels sur les électrodes, on peut obtenir dans un premier temps la séparation des macromolécules par migration dans une direction donnée, puis dans un second temps leur transfert sur une membrane de l'élément de migration-transfert.

On obtient ainsi, par la combinaison de moyens de la présente invention, une séparation et un transfert automatisés de macromolécules et/ou de fragments de celles-ci, rapides et faciles à mettre en oeuvre .

Dans le cas de la séparation d'acides nucléiques, la détection de ceux-ci sur la membrane, séparée de l'élément de migration-transfert, peut être effectuée à un poste approprié, par hybridation avec une sonde complémentaire.

Dans le cas de la séparation de protéines, la détection de celles-ci, sur la membrane, séparée de l'élément de migration-transfert, peut être effectuée à un poste approprié, soit par marquage direct avec un colorant aspécifique, soit par marquage direct avec un ligand spécifique (anticorps, ligand physiologique), soit par marquage indirect avec deux ou trois ligands.

Outre les dispositions qui précèdent, l'invention comprend encore d'autres dispositions qui ressortiront de la description qui va suivre, qui se réfère à une description détaillée de l'installation avec référence au dessin annexé, dans lequel :
- la Figure 1 représente une vue schématique illustrant l'installation ;
- la Figure 2 représente une vue schématique en perspective, illustrant le poste de traitement ;
- la Figure 3 représente une vue schématique, en coupe longitudinale, d'un mode de réalisation d'élément pour la migration-transfert ;
- la Figure 4 représente une vue schématique, en perspective, d'un mode de réalisation de la cuve de migration.

Il doit être bien entendu, toutefois, que ce dessin et les parties descriptives correspondantes sont donnés uniquement à titre d'illustration de l'objet de l'invention dont ils ne constituent en aucune manière une limitation.

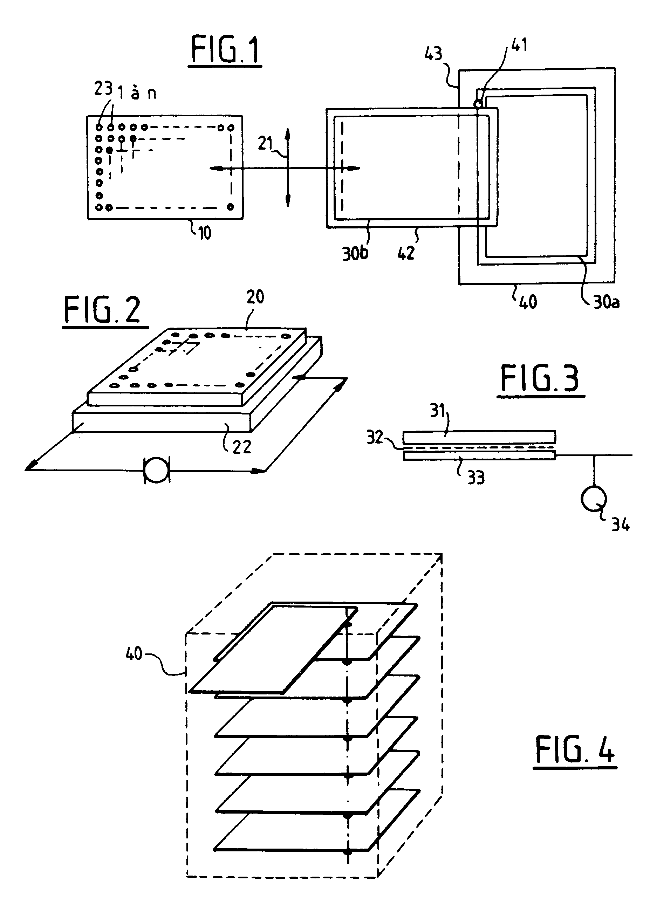

L'installation conforme à l'invention est illustrée schématiquement sur la Figure 1.

Des acides nucléiques isolés de manière appropriée sont amenés à un poste de traitement 20 qui, dans la réalisation représentée, est une plaque 10 de microtitration à quatre vingt seize trous, à laquelle sont associés des moyens 22 de réglage de la température, Figure 2.

Dans le poste de traitement 20 a lieu la digestion des acides nucléiques, en apportant dans chacun des puits 23₁ à 23ₙ, la quantité d'enzyme de restriction nécessaire ; on ajoute ensuite, dans les puits, de l'agarose "low melting" maintenue à l'état liquide par l'intermédiaire des moyens de réglage de température non représentés sur cette Figure, associés au poste de traitement, au moyen d'une pipette mobile non représentée sur cette Figure.

Après digestion, les fragments d'acides nucléiques obtenus, contenus dans l'agarose liquide, sont transférés par l'intermédiaire du bras de transfert 21 qui permet le dépôt desdits fragments d'acides nucléiques sur le gel d'électrophorèse 31, d'un élément 30 pour la migration-transfert, préalablement placé sur l'un des cadres 42 de la structure interne de la cuve de migration 40. Le gel d'électrophorèse comporte des alvéoles préformées dans lesquelles sont effectués les dépôts.

Pour réaliser le dépôt, chaque élément pour la migration-transfert est extérieur à la cuve et orienté en position 30b, alors qu'après dépôt, l'élément est ramené dans sa position 30a, intérieure à la cuve.

Lorsque les dépôts, par exemple douze dépôts par gel, sont effectués sur le gel d'électrophorèse 31 d'un élément 30₁ porté par un cadre 42₁ en position (b), ledit cadre pivote de 90° jusqu'à la position (a) autour de l'axe 41 et ledit cadre 42₁ descend dans la cuve 40 d'un pas correspondant à l'intervalle entre deux cadres 42 ; le cadre suivant 42₂, initialement en position (a), pivote en position (b) et est prêt à recevoir une nouvelle série de dépôts, sur le gel de l'élément 30₂ porté par ledit cadre.

Lorsque tous les acides nucléiques sont déposés dans les alvéoles des gels d'électrophorèse, les alvéoles sont complétées avec de l'agarose liquide et la structure interne (41 ; 42₁ à 42ₙ) est complètement introduite dans la cuve de migration 40, la paroi amovible 43 de celle-ci est fermée et les moyens de réglage de température associés à ladite cuve et non représentés sur cette Figure assurent le refroidissement de ladite cuve, notamment pour la solidification du gel rapporté.

Ladite cuve de migration 40 est alors remplie d'un liquide de migration constitué par un tampon approprié par l'intermédiaire de moyens de remplissage non représentés ; elle comporte également des moyens d'évacuation et des moyens de translation verticale de la structure interne non représentés.

On procède alors à la migration électrophorétique par l'intermédiaire des moyens d'application du champ électrique non représentés.

Ledit champ est appliqué selon le grand axe des gels d'électrophorèse.

Les moyens d'application du champ électrique peuvent comprendre avantageusement mais de manière non limitative, des électrodes sur les faces internes des deux parois opposées de la cuve 40, perpendiculaires au grand axe des gels d'électrophorèse 31.

Les fragments d'acides nucléiques qui ont migré et ont été déposés sur la membrane 32, sont prêts pour l'hybridation et le repérage.

### Exemple 1 : Séparation d'ADN à l'aide de l'installation conforme à l'invention :

### 1°) Digestion enzymatique des ADN

Au poste de traitement 20 qui, dans une réalisation préférée est une plaque 10 de microtitration à 96 trous, on introduit des réactifs de digestion dans lesdits trous ou alvéoles ; on obtient par alvéole un volume final de 17 µl, après introduction des réactifs suivants :
a) ADN : 3 µg correspondant à 12 µl, pour obtenir une concentration finale de 176 ng/µl.
b) Enzyme de Restriction : 15 unités correspondant à 3µl, pour obtenir une concentration finale de 0,17 unité/µl.
c) Tampon approprié à la réaction, d'un volume de 2 µl, composé généralement de produits tels que :

| | |
|---|---|
| Spermidine à une concentration finale de | 2 mM |
| Tris-HCl (pH 7,5-8) | 10-50 mM |
| NaCl (chlorure de sodium) | 0-100 mM |
| MgCl₂ (chlorure de magnésium) | 0-20 mM. |

Après traitement des acides nucléiques par l'enzyme de restriction, on ajoute dans chaque alvéole :
d) facultativement, un colorant du front de migration constitué de bleu de bromophénol ou autre ; en introduisant un volume de 1 µl correspondant à une concentration finale de 0,02 % (g pour 100 ml) ;
e) Agarose Low Melting : on introduit un volume de 7-8 µl correspondant à une concentration en produit ajouté de 1,5 à 4,5 % (g pour 100 ml de tampon de migration) ; on obtient une concentration finale de 0,5 à 1,5 % (g pour 100 ml).

### 2°) Gel d'électrophorèse tampon de migration :

a) le gel d'électrophorèse est constitué de :
   agarose (normal ou Low Melting) à une concentration finale de 0,5 à 1,5 % (en gramme d'agarose pour 100 ml de tampon de migration).
b) le tampon de migration est constitué de TEA/BET :
   Tris Acetate à une concentration finale de 40 mM
   EDTA à une concentration finale de 1 mM
   Bromure d'éthydium à une concentration finale de 0,5 µg/ml
c) Les paramètres de migration sont très variables et varient :
   - en temps : de une heure à quarante heures, et
   - en voltage : de 25 à 70 Volts.

### 3°) Transfert sur la membrane de transfert-fixation :

a) quel que soit le moyen de transfert des acides nucléiques sur la membrane de transfert-fixation, au préalable, l'élément de migration-transfert (gel d'électrophorèse) est traité par les tampons suivants :
   - HCl à une concentration finale de 0,15 M
   - Tampon de dénaturation :
      NaCl à une concentration finale de 1,5 M,
      NaOH à une concentration finale de 0,5 M,
   - Tampon de neutralisation :
      NaCl à une concentration finale de 1,5 M,
      Tris-HCl (pH 7,2) à une concentration finale de 0,5 M,
      EDTA à une concentration finale de 1 mM.

### 4°) Type de membrane : membrane inerte de nylon (HYBOND - AMERSHAM).

### Exemple 2 : Le protocole est identique à celui de l'Exemple 1, seul le tampon de migration diffère et est constitué de TBE/BET :

Tris-borate à une concentration finale de 89 mM
Acide borique à une concentration finale de 89 mM
EDTA à une concentration finale de 2 mM
Bromure d'ethydium à une concentration finale de 0,5 µg/ml.

### Exemple 3 : Séparation d'ARN à l'aide de l'installation conforme à l'invention :

On procède comme dans l'Exemple 1 ; toutefois en ce cas le gel n'est pas traité par le tampon de dénaturation.

## Revendications

1. Installation pour la séparation de macromolécules et/ou de fragments de celles-ci, comprenant :
- une pluralité d'éléments pour la migration-transfert (30) desdites macromolécules, incluant chacun un gel d'électrophorèse (31) et une membrane de transfert-fixation (32) desdites macromolécules, pour la migration puis le transfert desdites macromolécules du gel vers la membrane ;
- des moyens d'amenée (21) desdites macromolécules de l'échantillon vers les éléments de migration-transfert ;
- une cuve de migration (40) comportant une structure interne amovible formée d'une pluralité de cadres (42) susceptibles d'accueillir lesdits éléments, et dans laquelle, la migration et le transfert des macromolécules sont réalisés respectivement à l'aide :
(a) des moyens d'application d'un premier champ électrique provoquant la migration électrophorétique des macromolécules, incluant une série d'électrodes parallèles entre elles et aux éléments de migration-transfert, lesquelles électrodes sont disposées dans des plans perpendiculaires à la direction de migration des macromolécules dans lesdits éléments ; et
(b) des moyens identiques d'application d'un deuxième champ électrique, perpendiculaire au premier champ électrique, pour le transfert des macromolécules des gels vers les membranes et pour leur fixation sur lesdites membranes, et
- un microprocesseur d'automatisation de la commande séquentielle de l'amenée des macromolécules auxdits éléments de migration-transfert, de l'introduction desdits éléments dans la cuve de migration, puis de la mise en oeuvre des premier et deuxième champ électrique.

2. Installation selon la revendication 1, caractérisée en ce que chaque élément pour la migration-transfert comprend avantageusement, associé à la membrane de transfert-fixation (32) et au gel d'électrophorèse (31), un support (33), ledit élément étant sous forme d'un empilage, dont la membrane (32) de transfert-fixation peut être séparée.

3. Installation selon la revendication 1 ou la revendication 2, caractérisée en ce que, dans le cas de la séparation d'acides nucléiques, elle comprend en outre un poste de traitement (20) par digestion desdits acides nucléiques, situé en amont des éléments de migration-transfert.

4. Installation selon la revendication 3, caractérisée en ce que le poste de traitement (20) de digestion comporte des moyens d'introduction des réactifs de digestion dans les alvéoles d'une plaque de microtitration contenant les acides nucléiques, ainsi que des moyens de réglage de la température de ladite plaque.

5. Installation selon l'une quelconque des revendications 1 à 4, caractérisée en ce que préalablement au dépôt des macromolécules sur le gel d'électrophorèse, le coulage dudit gel est réalisé et des alvéoles sont préformées dans ledit gel au moyen d'outils appropriés, lesdits outils étant commandés par le microprocesseur d'automatisation.

6. Installation selon la revendication 5, caractérisée en ce que chaque élément pour la migration-transfert comprend quatre parois dont deux, adjacentes au moyen d'application du champ électrique de migration sont des membranes de dialyse, lesdites parois formant cuvette et servant de moule audit gel d'électrophorèse, préalablement à sa solidification.

7. Installation selon l'une quelconque des revendications 1 à 6, caractérisée en ce que les cadres de la structure interne de la cuve de migration (40) sont montés à pivotement autour d'un axe (41) de celle-ci, pour pouvoir passer d'une position en laquelle les dépôts de macromolécules sont possibles, à une position en laquelle s'effectue la migration-transfert.

8. Installation selon l'une quelconque des revendications 1 à 7, caractérisée en ce que la cuve de migration comprend des moyens de réglage de sa température et des moyens de translation verticale de la structure interne.

9. Installation selon l'une quelconque des revendications 1 à 8, caractérisée en ce qu'elle comprend également des moyens de remplissage et des moyens d'évacuation de la cuve de migration en produits liquides de migration et/ou de transfert, lesdits moyens étant commandés par le microprocesseur d'automatisation.

10. Installation selon l'une quelconque des revendications 7 à 9, caractérisée en ce qu'elle comprend également des moyens pour commander le pivotement des cadres, dans et hors de la cuve, ainsi que des moyens de commande pas à pas de l'ensemble de la structure interne, qui sont dans la direction de l'axe.

11. Installation selon l'une quelconque des revendications 1 à 10, caractérisée en ce que les moyens d'application du premier champ électrique incluent des moyens d'application de potentiels aux électrodes situées dans les plans précités et des moyens de commande pour faire varier dans l'espace et/ou dans le temps la distribution des potentiels desdits plans d'électrodes.

12. Installation selon la revendication 11, caractérisée en ce que les électrodes sont disposées aux intersections de deux séries de plans, les premiers perpendiculaires aux éléments de migration et à la direction précitée de migration, les seconds perpendiculaires aux premiers.

## Claims

1. An installation for the separation of macromolecules and/or fragments thereof comprising:
- a plurality of elements for the migration-transfer (30) of the said macromolecules, each including an electrophoresis gel (31) and a transfer-fixation membrane (32) of the said macromolecules for the migration and then the transfer of the said macromolecules from the gel towards the membrane;
- means (21) for supplying the said macromolecules from the sample towards the migration-transfer elements;
- a migration vessel (40) comprising a movable internal structure formed from a plurality of frames (42) capable of accommodating the said elements, and in which vessel the migration and the transfer of the macromolecules are brought about respectively with the aid of;
(a) means for applying a first electric field causing the electrophoretic migration of the macromolecules, including a series of electrodes parallel between them and to the migration-transfer elements, which electrodes are disposed in planes which are perpendicular to the migration direction of the macromolecules in the said elements; and
(b) identical means for applying a second electric field, perpendicular to the first electric field, for the transfer of the macromolecules from the gels towards the membranes and for their fixation on the said membranes, and
- an automation microprocessor for the sequential control of the supply of the macromolecules to the said migration-transfer elements, for the introduction of the said elements into the migration vessel, then for the implementation of the first and second electric field.

2. An installation according to claim 1, characterised in that each element for the migration-transfer advantageously comprises, in association with the transfer-fixation membrane (32) and the electrophoresis gel (31), a support (33), the said element being in the form of a stack, the transfer-fixation membrane (32) of which can be separated.

3. An installation according to claim 1 or claim 2, characterised in that, in the case of the separation of nucleic acids, it comprises moreover a point (20) for processing by digestion of the said nucleic acids, situated upwards of the migration-transfer elements.

4. An installation according to claim 3, characterised in that the point (20) for digestion processing comprises means for introducing digestion reagents into the alveoli of a microtitration plate containing the nucleic acids as well as means for controlling the temperature of the said plate.

5. An installation according to any one of claims 1 to 4, characterised in that prior to the depositing of the macromolecules onto the electrophoresis gel, the cooling of the said gel is brought about and alveoli are preformed in the said gel by means of suitable tools, the said tools being controlled by the automation microprocessor.

6. An installation according to claim 5, characterised in that each element for the migration-transfer comprises four walls of which two, adjacent to the application means of the migration electric field, are dialysis membranes, the said walls forming a tray and seeing as a mould for the said electrophoresis gel prior to its solidification.

7. An installation according to any one of claims 1 to 6, characterised in that the frames of the internal structure of the migration vessel (40) are pivotably mounted about an axis (41) thereof, in order to be able to move from a position in which the deposits of macromolecules are possible to a position in which the migration-transfer takes place.

8. An installation according to any one of claims 1 to 7, characterised in that the migration vessel comprises means for controlling its temperature and means for vertically translating the internal structure.

9. An installation according to any one of claims 1 to 8, characterised in that it comprises means for filling the migration vessel with liquid products of migration and/or transfer as well as means for evacuating it thereof, the said means being controlled by the automation microprocessor.

10. An installation according to any one of claims 7 to 9, characterised in that it comprises means for controlling the pivoting of the frames, inside and outside the vessel, as well as the means for controlling, step by step, the entire internal structure, which means are in the direction of the axis.

11. An installation according to any one of claims 1 to 10, characterised in that the application means of the first electric field include means for applying potentials to the electrodes situated in the afore-mentioned planes and control means in order to vary, in space and/or time, the distribution of the potentials of the said electrode planes.

12. An installation according to claim 11, characterised in that the electrodes are disposed at the intersections of two series of planes, the first perpendicular to the migration elements and to the afore-mentioned migration direction, the second perpendicular to the first.

## Patentansprüche

1. Vorrichtung zur Trennung von Makromolekülen und/oder deren Fragmenten umfassend:
- eine Vielzahl von Elementen zur Wanderung-Transport (30) der Makromoleküle einschließlich jeweils eines Elektrophoresegels (31) und einer Transport-Fixierungsmembran (32) der Makromoleküle zur Wanderung und zum anschließenden Transport der Makromoleküle des Gels gegen die Membran;
- Mittel zur Zufuhr (21) der Makromoleküle der Probe gegen die Wanderungs-Transportelemente;
- eine Wanderungswanne (40) umfassend eine abnehmbare innere Struktur, die aus einer Vielzahl von Kästen (42) gebildet ist, die die Elemente aufnehmen können und worin die Wanderung und der Transport der Makromoleküle jeweils mit Hilfe von
(a) Mitteln zur Anlegung eines ersten elektrischen Felds, das eine elektrophoretische Wanderung der Makromoleküle hervorruft, einschließlich einer Reihe von parallelen Elektroden, zwischen diesen und den Wanderungs-Transportelementen, wobei die Elektroden in Ebenen, die zur Wanderungsrichtung der Makromoleküle in den Elementen senkrecht stehen, angebracht sind, und
(b) identischer Mittel zur Anlegung eines zweiten elektrischen Felds, das senkrecht zu dem ersten elektrischen Feld verläuft, für den Transport der Makromoleküle der Gele gegen die Membranen und zu ihrer Fixierung auf den Membranen
durchgeführt werden, und
- einen Mikroprozessor zur Automatisierung der aufeinanderfolgenden Steuerung der Zufuhr der Makromoleküle zu den Wanderungs-Transportelementen, der Einführung der Elemente in die Wanderungswanne, der anschließenden Anlegung des ersten und zweiten elektrischen Felds.

2. Vorrichtung nach Anspruch 1, dadurch **gekennzeichnet**, daß jedes Element für die Wanderung-Transport vorteilhafterweise in Assoziation mit der Transfer-Fixierungsmembran (32) und dem Elektrophoresegel (31) einen Träger (33) enthält, wobei das Element in Form eines Stapels vorliegt, dessen Transfer-Fixierungsmembran (32) getrennt werden kann.

3. Vorrichtung nach Anspruch 1 oder 2, dadurch **gekennzeichnet**, daß im Falle der Trennung von Nucleinsäuren sie weiterhin eine Behandlungsschicht (20) zur Spaltung der Nucleinsäuren enthält, die auf den Wanderungs-Transportelementen angeordnet ist.

4. Vorrichtung nach Anspruch 3, dadurch **gekennzeichnet**, daß die Behandlungsschicht (20) zur Spaltung Mittel zur Einbringung der Spaltungsreagentien in die Kavitäten einer Mikrotiterplatte enthaltend die Nucleinsäuren sowie Mittel zur Temperaturregulierung der Platte umfaßt.

5. Vorrichtung nach einem der Ansprüche 1 bis 4, dadurch **gekennzeichnet**, daß vor der Aufbringung der Makromoleküle auf dem Elektrophoresegel das Gießen des Gels durchgeführt wird und Kavitäten auf dem Gel mit einem geeigneten Werkzeug vorgebildet werden, wobei die Werkzeuge durch den Mikroprozessor für die Automatisierung gesteuert werden.

6. Vorrichtung nach Anspruch 5, dadurch **gekennzeichnet**, daß jedes Element für die Wanderung-Transport vier Wände umfaßt, von denen zwei die dem Mittel zur Anlegung des elektrischen Felds zur Wanderung benachbart sind, Dialysemembranen sind, wobei die Wände eine Cuvette bilden und als Form für das Elektrophoresegel vor seiner Verfestigung dienen.

7. Vorrichtung nach einem der Ansprüche 1 bis 6, dadurch **gekennzeichnet**, daß die Kästen der inneren Struktur der Wanderungswanne (40) um eine Achse (41) davon drehbar angeordnet sind, um sie von einer Position, in der die Aufbringung der Makromoleküle möglich ist, in eine Position, in der die Wanderung-Transport stattfindet, bringen zu können.

8. Vorrichtung nach einem der Ansprüche 1 bis 7, dadurch **gekennzeichnet**, daß die Wanderungswanne Mittel zur Temperaturregulierung und Mittel zur vertikalen Überführung der inneren Struktur enthält.

9. Vorrichtung nach einem der Ansprüche 1 bis 8, dadurch **gekennzeichnet**, daß sie ebenso Mittel zur Befüllung und Mittel zur Entleerung der Wanderungswanne mit flüssigen Wanderungs- und/oder Transportprodukte enthält, wobei die Mittel durch den Mikroprozessor zur Automatisierung gesteuert werden.

10. Vorrichtung nach einem der Ansprüche 7 bis 9, dadurch **gekennzeichnet**, daß sie ebenso Mittel zur Steuerung der Drehung der Kästen innerhalb und außerhalb der Wanne sowie Mittel zur schrittweisen Steuerung der Gesamtheit der inneren Struktur, welche in Richtung der Achse verlaufen, enthält.

11. Vorrichtung nach einem der Ansprüche 1 bis 10, dadurch **gekennzeichnet**, daß die Mittel zur Anlegung des ersten elektrischen Felds Mittel zur Anlegung eines Potentials an die Elektroden, die in den vorstehend genannten Ebenen angeordnet sind, und Mittel zur Steuerung enthalten, um die Verteilung der Potentiale der Elektrodenebene bezüglich Raum und/oder Zeit zur variieren.

12. Vorrichtung nach Anspruch 11, dadurch **gekennzeichnet**, daß die Elektroden in Einschnitten der zwei Reihen von Ebenen angeordnet sind, wobei die ersten senkrecht zu den Wanderungselementen und zur vorstehend genannten Wanderungsrichtung stehen und die zweiten senkrecht zu den ersten stehen.
